# DEMANDE DE BREVET EUROPEEN

(11) **EP 4 386 618 A1**
(43) Date de publication de la demande: **19.06.2024**
(21) Numéro de dépôt: 23215703.2
(22) Date de dépôt: 12.12.2023
(51) Int. Cl.: G06K 7/10, G06K 7/14

(54) **PROCÉDÉ ET SYSTÈME POUR LA LECTURE D'UN CODE D'IDENTIFICATION DANS UNE SCÈNE**

(30) Priorité: 14.12.2022 FR 2213321
(71) Demandeur: Viziotix, 31750 Escalquens (FR)
(72) Inventeur: LAFFARGUE, Franck, 31400 Toulouse (FR); BESSETTES, Vincent, 31320 Castanet-Tolosan (FR); THEBAULT, Patrice, 31180 Lapeyrouse Fossat (FR); MOLLON, Cédric, 31750 Escalquens (FR)
(74) Mandataire: Argyma

(57) **Abrégé**

Un procédé, mis en oeuvre par ordinateur, pour la lecture d'un code d'identification (ID) dans une scène, le procédé comprenant des étapes consistant à acquérir (E1) une première image numérique (IMG1), déterminer (E2) une image de mouvement (IMGΔ), déterminer (E4) une pluralité de cellules primaires dans l'image de mouvement (IMGΔ), déterminer une probabilité de présence d'un code d'identification (ID) dans chaque cellule primaire de la première image numérique (IMG1) de manière à en déduire des cellules secondaires et une zone de focus pertinente, acquérir une deuxième image avec la zone de focus pertinente et réaliser une lecture d'un code d'identification (ID) dans la deuxième image.

## Description

### DOMAINE TECHNIQUE

La présente invention concerne le domaine de la lecture d'un code d'identification dans une scène, par exemple, pour identifier des produits dans un entrepôt.

Dans le domaine de la logistique et du commerce, il est connu de disposer sur un produit une étiquette comportant un code d'identification afin de permettre l'identification du produit de manière informatique afin notamment de connaître sa nature, son prix et autre.

Le code d'identification se présente généralement sous la forme d'un code-barres et peut comprendre des barres noires et blanches parallèles (code-barres de catégorie « une dimension » ou 1D) ou une matrice de carrés noirs et blancs (code-barres de catégorie « deux dimensions » ou 2D).

Dans un entrepôt comportant un grand nombre de produits, il est connu de réaliser un inventaire des produits au moyen d'un robot mobile équipé d'un dispositif d'acquisition, par exemple une caméra, pour acquérir une image d'une scène susceptible de comprendre un ou plusieurs code-barres. L'image subit un procédé de traitement comprenant des étapes consistant, d'une part, à détecter un ou plusieurs code-barres et, d'autre part, à lire le ou lesdits code-barres détectés.

En pratique, la lecture d'un code-barres est optimale lorsque le code-barres est suffisamment net dans l'image. Ainsi, si la zone de focus du dispositif d'acquisition n'est pas réglée de manière correcte, l'image est floue et la lecture n'est pas possible. Un tel problème est fréquent lorsque le dispositif d'acquisition est déplacé rapidement dans la scène, le déplacement relatif induisant une zone de focus qui n'est pas adaptée.

Pour éliminer cet inconvénient, il a été proposé de réaliser l'acquisition d'une grande quantité d'images avec différentes zones de focus puis d'évaluer la netteté de chacune des images. Une telle méthode est connue par la demande de brevet US2020/0034591A1. L'image la plus nette est sélectionnée et traitée afin de détecter un code-barres et le lire. Une telle méthode présent l'inconvénient de demander de grandes ressources informatiques et augmente le temps de lecture d'un code-barres. De plus, une image peut être considérée comme globalement nette alors que le code-barres n'est pas lisible.

Pour mieux définir la zone de focus, il a été proposé d'évaluer la distance entre le dispositif d'acquisition et un produit au moyen d'équipements tels qu'un capteur laser (LIDAR) ou d'un capteur à ultrasons. De tels équipements sont onéreux et augmentent l'encombrement, ce qui réduit leur capacité d'intégration sur un robot mobile ou autre.

Pour résoudre cet inconvénient, une solution serait de réduire la vitesse du robot mobile afin de limiter les défauts de focus qui interdisent une lecture optimale. Une telle solution n'est pas adaptée étant donné que cela augmenterait de manière importante la durée pour réaliser un inventaire de produits dans un entrepôt.

L'invention vise ainsi à éliminer au moins certains de ces inconvénients.

### PRESENTATION DE L'INVENTION

L'invention concerne également un procédé, mis en oeuvre par ordinateur, pour la lecture d'un code d'identification dans une scène, le procédé comprenant des étapes consistant à :
- Acquérir une première image numérique de la scène avec une zone de focus par défaut,
- Déterminer une image de mouvement par comparaison de la première image numérique à une image numérique antérieure, chaque image comportant une pluralité de pixels ayant des positions déterminées et une valeur, la valeur de chaque pixel de l'image de mouvement étant déterminée par soustraction de la valeur d'un pixel de l'image numérique antérieure à la valeur d'un pixel de la première image numérique à des positions correspondantes,
- Déterminer dans l'image de mouvement les pixels ayant une valeur supérieure à un seuil primaire prédéterminé, ci-après désignés, pixels primaires,
- Déterminer une pluralité de cellules primaires à partir des pixels primaires dans l'image de mouvement,
- Déterminer une probabilité de présence d'un code d'identification dans chaque cellule primaire de la première image numérique,
- Déterminer les cellules primaires ayant une probabilité de présence supérieure à un seuil secondaire prédéterminé, ci-après désignés, cellules secondaires,
- Déterminer une zone de focus pertinente à partir desdites cellules secondaires,
- Acquérir une deuxième image avec la zone de focus pertinente et
- Réaliser une lecture d'un code d'identification dans la deuxième image.

Grâce à l'invention, on utilise de manière avantageuse une première image de manière sacrificielle pour déterminer une zone de focus pertinente localisée sur la position probable d'un code d'identification. Cela permet d'acquérir une deuxième image avec un code d'identification très net qui peut être lu de manière pratique et rapide avec des ressources informatiques limitées. Compte tenu de la grande netteté, les ressources informatiques pour lire sont avantageusement réduites. L'utilisation de cellules primaires permet de traiter des groupes de pixels de manière pratique et rapide. Seules une quantité réduite d'information est traitée. La détermination de la zone de focus pertinente est réalisée rapidement de manière à ce que la deuxième image possède une faible quantité de mouvement par rapport à la première image. Grâce à l'invention, on peut réaliser la lecture de codes d'identification à haute vitesse, ce qui permet une mise en oeuvre dans des robots mobiles ou sur des chariots de transport. Un inventaire de produits peut alors être réalisé de manière rapide. Cela permet d'éviter de répéter de nombreuses opérations de réglage de la zone de focus.

Selon un aspect, l'étape consistant à déterminer une pluralité de cellules primaires comprend des sous-étapes consistant à :
- Déterminer dans l'image de mouvement une pluralité de cellules, chaque cellule englobant un même nombre de pixels,
- Déterminer, pour chaque cellule, le nombre de pixels primaires compris dans ladite cellule,
- Considérer comme cellule primaire uniquement une cellule ayant un nombre de pixels primaires supérieur à un seuil de mouvement prédéterminé.

De manière avantageuse, une cellule primaire permet de former une fenêtre de lecture sur une zone de l'image la plus pertinente. Cela permet de réduire les opérations et d'accélérer le traitement.

Selon un aspect, le procédé comprend une étape consistant à :
- Déterminer le nombre de cellules primaires par rapport au nombre total de cellules et
- Acquérir une nouvelle première image si le nombre de cellules primaires par rapport au nombre total de cellules est supérieur à un seuil de filtrage prédéterminé.

De manière avantageuse, si la quantité de mouvement est trop importante, l'image est rejetée. Seules les images avec une faible quantité de mouvement sont exploitées pour déterminer une zone de focus pertinente. Cela évite de traiter des images qui ne pourront pas être lues.

Selon un aspect, la zone de focus pertinente est déterminée en prenant en compte de manière prioritaire les cellules secondaires ayant la probabilité de présence la plus forte. Cela permet de s'assurer que la zone de focus pertinente est centrée sur le code d'identification.

Selon un aspect, la probabilité de présence d'un code d'identification dans une cellule primaire est déterminée au moyen d'au moins une fonction mathématique de corrélation appliquée aux pixels de ladite cellule primaire. Une telle fonction mathématique de corrélation permet de détecter la présence, la nature et l'orientation du code d'identification. Cela permet avantageusement de distinguer un code d'identification par rapport à du texte et à distinguer plusieurs codes d'identification différents dans une image.

Selon un aspect, la fonction mathématique de corrélation comprend une mesure d'intensité d'un gradient selon différentes orientations angulaires et une comparaison de la mesure d'intensité à au moins un profil d'intensité caractéristique d'une catégorie d'un code d'identification. Cela permet de mesurer un critère de ressemblance, c'est-à-dire, une probabilité de présence.

Selon un aspect, un code d'identification pouvant appartenir à au moins deux catégories, le procédé comprenant une étape consistant à :
- Déterminer une probabilité de présence pour chaque catégorie de code d'identification dans chaque cellule primaire de la première image numérique,
- Pour chaque catégorie de code d'identification, déterminer les cellules primaires ayant une probabilité de présence supérieure à un seuil secondaire prédéterminé, ci-après désignés, cellules secondaires,
- Pour chaque catégorie de code d'identification, déterminer une zone de focus pertinente à partir desdites cellules secondaires,
- Pour chaque catégorie de code d'identification, acquérir une deuxième image avec la zone de focus pertinente et
- Pour chaque catégorie de code d'identification, réaliser une lecture d'un code d'identification dans la deuxième image.

L'invention concerne également un produit de type programme d'ordinateur, comprenant au moins une séquence d'instructions stockée et lisible par un processeur et qui, une fois lue par ce processeur, provoque la réalisation des étapes du procédé tel que présenté précédemment.

L'invention concerne également un support lisible par un ordinateur comportant le produit de type programme d'ordinateur tel que présenté précédemment.

L'invention concerne également un système de lecture d'un code d'identification dans une scène, le système de lecture comprenant un dispositif d'acquisition configuré pour acquérir plusieurs images numériques de la scène et un ordinateur configuré pour :
- Commander au dispositif d'acquisition d'acquérir une première image numérique de la scène avec une zone de focus par défaut,
- Déterminer une image de mouvement par comparaison de la première image numérique à une image numérique antérieure, chaque image comportant une pluralité de pixels ayant des positions déterminées et une valeur, la valeur de chaque pixel de l'image de mouvement étant déterminée par soustraction de la valeur d'un pixel de l'image numérique antérieure à la valeur d'un pixel de la première image numérique à des positions correspondantes,
- Déterminer dans l'image de mouvement les pixels ayant une valeur supérieure à un seuil primaire prédéterminé, ci-après désignés, pixels primaires,
- Déterminer une pluralité de cellules primaires à partir des pixels primaires dans l'image de mouvement,
- Déterminer une probabilité de présence d'un code d'identification dans chaque cellule primaire de la première image numérique,
- Déterminer les cellules primaires ayant une probabilité de présence supérieure à un seuil secondaire prédéterminé, ci-après désignés, cellules secondaires,
- Déterminer une zone de focus pertinente à partir desdites cellules secondaires,
- Commander au dispositif d'acquisition d'acquérir une deuxième image avec la zone de focus pertinente et
- Réaliser une lecture d'un code d'identification dans la deuxième image.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
La figure 1 est une représentation schématique d'une scène comportant une pluralité de produits, disposés à différentes positions, qui sont associés chacun à un code d'identification.
La figure 2 est une représentation schématique d'un système de lecture d'un code d'identification selon une forme de réalisation de l'invention.
La figure 3 est une représentation schématique des étapes de mise en oeuvre d'un procédé de lecture.
La figure 4 est une représentation schématique de la détermination de cellules primaires dans l'image de mouvement.
La figure 5 est une représentation schématique de la probabilité de présence dans les cellules primaires de la première image.
La figure 6 est une représentation schématique d'histogrammes réalisés pour un code-barres de catégorie « une dimension », pour un code-barres de catégorie « deux dimensions » et pour du texte.
La figure 7 est une représentation schématique de la détermination des cellules primaires ayant la probabilité de présence la plus élevée (cellules secondaires).
La figure 8 est une représentation schématique de la détermination d'une zone de focus pertinente déterminée à partir des cellules secondaires.
La figure 9 est une représentation schématique d'une acquisition d'une deuxième image avec la zone de focus pertinente.
La figure 10 est une représentation schématique d'une étape de lecture de la deuxième image.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

L'invention concerne un procédé, mis en oeuvre par ordinateur, pour lecture d'un code d'identification dans une scène. A titre d'exemple, la scène peut représenter des étagères dans un entrepôt avec de nombreux produits à différentes positions. Chaque produit comportant un code d'identification.

Le code d'identification se présente généralement sous la forme d'un code-barres et peut comprendre des barres noires et des barres blanches parallèles (code-barres de catégorie « une dimension » ou 1D) ou une matrice de carrés noirs et blancs (code-barres de catégorie « deux dimensions » ou 2D) appelé également code matriciel. Parmi les codes matriciels, on connait notamment le QR Code, le Datamatrix, le code Aztec ou le Maxicode. Un tel code d'identification ID est simple à lire dans une image si le code d'identification ID est net dans l'image.

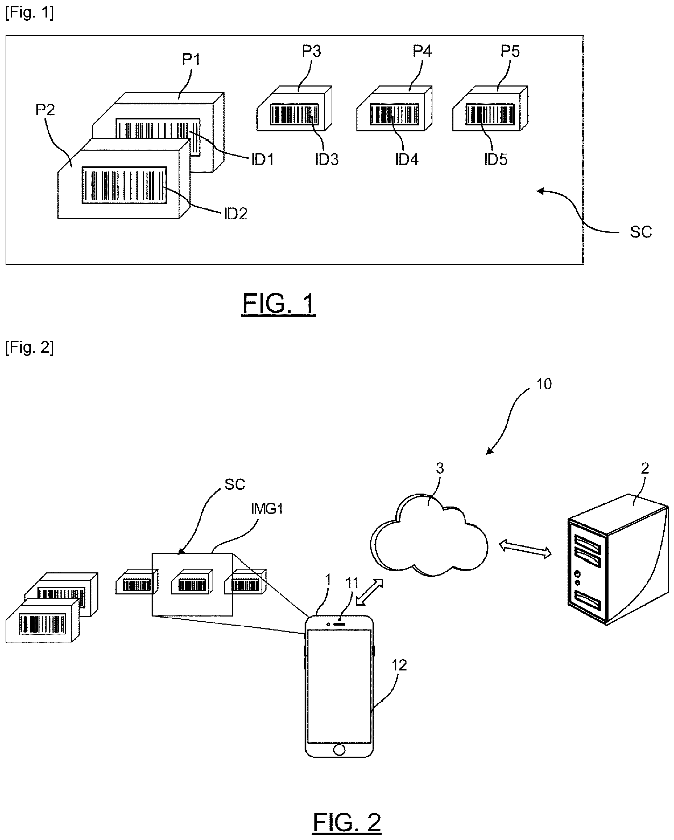

A titre d'exemple, en référence à la figure 1, il est représenté une scène d'un entrepôt SC comportant cinq produits P1-P5 qui sont chacun associés à un code d'identification ID1-ID5. Les produits P1-P5 sont à différentes positions dans l'entrepôt.

De manière connue, afin de réaliser un inventaire, de vérifier des prix ou d'assurer un gestion logistique, il est nécessaire de contrôler les produits P1-P5 présents dans l'entrepôt par la lecture de leurs codes d'identification ID1-ID5 au moyen d'un système de lecture 10 qui va être dorénavant présenté.

En référence à la figure 2, il est représenté de manière schématique un système de lecture 10 selon une forme de réalisation de l'invention. Le système de lecture 10 comprend un dispositif d'acquisition 11 configuré pour acquérir au moins une image numérique de la scène SC, chaque image numérique comportant une pluralité de pixels ayant des positions déterminées et une valeur. De manière connue, les pixels sont organisés en rangées et colonnes. Chaque pixel comporte une position définie par sa rangée et sa colonne d'appartenance. De préférence, la valeur d'un pixel est définie en niveau de gris. De préférence, chaque image comporte le même nombre de pixels.

Le système de lecture 10 comporte en outre un calculateur, appelé également ordinateur, pour réaliser notamment des étapes de traitement d'images. Certaines des étapes de traitement peuvent être réalisées de manière locale par un processeur 12 ou de manière déportée, par exemple, par un serveur de traitement 2 accessible via un réseau de communication 3, par exemple, via le réseau internet. Ainsi, le calculateur peut être local, déporté ou local/déporté.

Dans cet exemple, en référence à la figure 2, le système de lecture 10 se présente sous la forme d'un téléphone portable 1 comprenant un dispositif d'acquisition 11 et d'une carte électronique équipée d'un processeur 12. La carte électronique comporte également un module réseau pour permettre une connexion au serveur de traitement 2 via le réseau de communication 3. Ainsi, une partie des traitements du calculateur peut être réalisée par le processeur 12 tandis qu'une autre partie des traitements peut être réalisée par le serveur de traitement 2.

Le système de lecture 10 peut se présenter sous la forme d'un robot mobile, de préférence autonome, pour acquérir des images lors des déplacements du robot mobile. Afin d'augmenter l'intégration, il a également été proposé d'intégrer le système de lecture 10 à un chariot élévateur de manière à réaliser la lecture de codes d'identifications ID1-ID5 lors du déplacement de produits par le chariot ou lors de la circulation du chariot dans l'entrepôt.

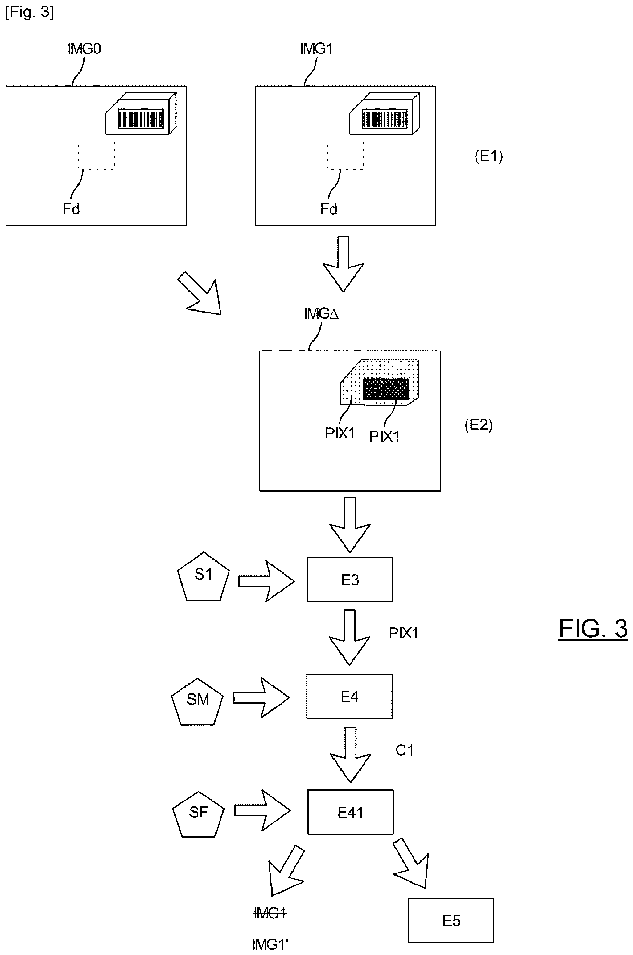

En référence à la figure 3, le dispositif d'acquisition 11 est configuré pour acquérir une pluralité d'images IMG0, IMG1 successives avec un intervalle de temps compris, par exemple, entre 20ms et 100ms. Comme indiqué préalablement, le dispositif d'acquisition 11 peut être déplacé, à la main ou de manière robotisée, ce qui induit un mouvement.

Le dispositif d'acquisition 11 est configuré pour acquérir une image selon une zone de focus qui est réglable. Dans cet exemple, en l'absence de réglage, le dispositif d'acquisition 11 est configuré pour acquérir une image selon une zone de focus par défaut Fd. En pratique, la zone de focus par défaut Fd est déterminée au centre de l'image (Figure 3).

Un exemple de mise d'un procédé de lecture va être présenté en référence à la figure 3.

Le procédé comprend une étape consistant à acquérir E1 une première image numérique IMG1 de la scène avec une zone de focus par défaut Fd. La première image IMG1 est acquise par le dispositif d'acquisition 11 avec une zone de focus par défaut Fd déterminée au centre de la première image IMG1. Dans cet exemple, la première image IMG1 comporte un unique code d'identification ID qui est éloigné de la zone de focus par défaut Fd. Dans cet exemple, le code d'identification ID est un code-barres de catégorie « une dimension ».

En référence à la figure 3, le procédé comprend une étape consistant à déterminer E2 une image de mouvement IMGΔ par comparaison de la première image numérique IMG1 à une image numérique antérieure IMG0. L'image numérique antérieure IMG0 a été acquise de préférence peu de temps avant la première image numérique IMG1 de manière à déterminer la quantité de mouvement lors de l'acquisition de la première image numérique IMG1. De manière préférée, l'image numérique antérieure IMG0 est celle qui a été acquise moins de 100 ms avant la première image IMG1, de préférence juste avant la première image IMG1, afin de posséder une quantité de mouvement la plus faible possible.

En pratique, chaque image IMG1, IMG0 comporte une pluralité de pixels avec une valeur, de préférence, un niveau de gris. La valeur de chaque pixel de l'image de mouvement IMGΔ est déterminée par soustraction de la valeur d'un pixel de l'image numérique antérieure IMG0 à la valeur d'un pixel de la première image numérique IMG1 à des positions correspondantes. De préférence, chaque image IMG1, IMG0 possède le même nombre de pixels.

Toujours en référence à la figure 3, le procédé comprend une étape consistant à déterminer E3 les pixels de l'image de mouvement IMGΔ ayant une valeur supérieure à un seuil primaire prédéterminé S1, ci-après désigné, pixels primaires PIX1. Dans cet exemple, les pixels primaires PIX1 sont représentés sur l'image de mouvement IMGΔ. Le seuil primaire prédéterminé S1 est déterminé en fonction du niveau de bruit dans la première image numérique IMG1. Selon un aspect, le niveau de bruit est évalué dans une zone uniforme de la première image numérique IMG1. En effet, sur une zone uniforme, on considère que la variation des niveaux de gris des pixels est uniquement due au bruit. En pratique, on calcule la moyenne et l'écart-type des niveaux de gris dans cette zone (bruit gaussien) et le niveau de bruit est fixé à un multiple de l'écart-type (par exemple 2 à 3 fois).

De manière préférée, le procédé comporte une étape consistant à déterminer E4 une pluralité de cellules à partir des pixels de l'image de mouvement IMGΔ. En pratique, chaque image de mouvement IMGΔ est divisée en une pluralité de cellules. De préférence, les cellules sont des rectangles ou des carrés de taille prédéterminée. Sur les figures, chaque cellule est représentée par un carré. Chaque cellule englobe le même nombre de pixels.

Chaque cellule est associée à un nombre N1 de pixels primaires PIX1 compris dans ladite cellule.

En référence à la figure 3, le procédé comprend une étape consistant à comparer le nombre de pixels primaires PIX1 d'une cellule à un seuil de mouvement prédéterminé SM, en particulier, déterminé en fonction du nombre de pixels englobés dans la cellule.

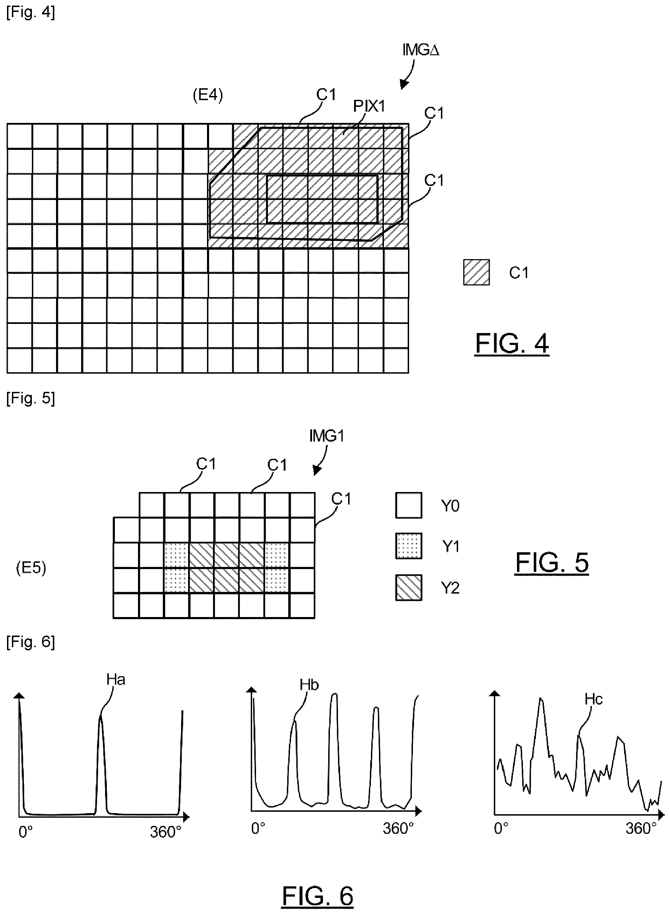

Si le nombre de pixels primaires PIX1 d'une cellule est supérieur au seuil de mouvement prédéterminé SM, la cellule comporte du mouvement et est désignée par la suite « cellule primaire C1 » comme illustré à la figure 4.

Les cellules primaires C1 sont déterminées à partir de l'image de mouvement IMGΔ et vont être appliquées à la première image IMG1 à la manière d'une fenêtre de lecture. Cela permet de traiter uniquement une quantité d'information limitée, mais pertinente, de la première image IMG1. Autrement dit, les cellules primaires C1 forment des fenêtres élémentaires qui permettent de traiter uniquement une portion d'une image afin d'accélérer le traitement.

Selon un aspect optionnel, le procédé comprend une étape consistant à évaluer le nombre de cellules primaires C1 par rapport au nombre total de cellules CTot et à le comparer à un seuil de filtrage prédéterminé SF. Si le nombre de cellules primaires C1 par rapport au nombre total de cellules CTot est supérieur au seuil de filtrage prédéterminé SF, la première image IMG1 est rejetée car elle comporte une trop grande quantité de mouvement. Le procédé comprend alors une étape consistant à acquérir une nouvelle première image IMG1' dont la quantité de mouvement sera également testée.

A l'inverse, si le nombre de cellules primaires C1 par rapport au nombre total de cellules CTot est inférieur au seuil de filtrage prédéterminé SF, la première image IMG1 est conservée pour le traitement comme illustré à la figure 3. Cette étape de filtrage E41 permet d'éliminer de manière précoce une première image IMG1 ayant une quantité de flou trop élevée, ce qui perturberait la lecture postérieure du code d'identification ID.

La quantité de mouvement est localisée sur les codes d'identification ID étant donné que la nature d'un code d'identification ID, en particulier un code-barres ou un code matriciel, génère des pixels primaires PIX1 du fait de la présence de barres noires/blanches ou d'une matrice de carrés noirs/blancs qui peuvent être mis en exergue de manière pratique dans l'image de mouvement IMGΔ. En pratique, la présence de texte dans la première image IMG1 génère également des pixels primaires PIX1.

En référence à la figure 5, le procédé comprend une étape consistant à déterminer E5 une probabilité Y0-Y2 de présence d'un code d'identification ID dans chaque cellule primaire C1 de la première image IMG1. De manière avantageuse, cette étape n'est réalisée que lorsque la quantité de flou est faible, ce qui permet de déterminer la probabilité de manière fiable (cf étape préalable E31).

En pratique, une ou plusieurs fonctions mathématiques de corrélation sont appliquées aux cellules primaires C1 de la première image IMG1 de manière à obtenir une probabilité de présence Y0-Y2 pour chaque cellule primaire C1 comme illustré à la figure 5. L'application des fonctions mathématiques de corrélation uniquement aux cellules primaires C1 de la première image IMG1 permet de réduire le temps de traitement et de limiter les ressources informatiques nécessaires. De manière préférée, en référence à la figure 5, les fonctions mathématiques de corrélation sont appliquées à chaque cellule primaire C1.

A titre d'exemple, en référence à la figure 6, la fonction mathématique de corrélation comprend une mesure d'intensité d'un gradient selon différentes orientations angulaires. En particulier, on détermine un histogramme Ha-Hc définissant l'amplitude du gradient sur une plage angulaire de 0 à 360°. En fonction de la catégorie du code d'indentification ou de l'absence de code d'identification, l'histogramme est caractéristique.

Dans cet exemple, la fonction mathématique de corrélation comprend une comparaison de la mesure d'intensité à au moins un profil d'intensité caractéristique d'une catégorie d'un code d'identification de manière à déterminer la probabilité de présence Y0-Y2 pour chaque cellule primaire C1 pour chaque catégorie.

Dans le cas d'un code-barre de catégorie « une dimension » avec des barres noires/blanches, l'histogramme Ha (Figure 6) comporte deux pics distants de 180° qui correspondent à l'orientation des barres. Pour le cas d'un code-barre de catégorie « deux dimensions » comportant une matrice de carrés noirs/blancs, l'histogramme Hb (Figure 6) comporte quatre pics distants de 90° qui correspondent à l'orientation de la matrice. De manière avantageuse, en présence d'un code d'identification, l'histogramme comporte des pics visibles qui sont interprétables. A l'inverse, en présence de texte, les pics ne sont pas répartis de manière précise comme illustré sur l'histogramme Hc. De manière avantageuse, par comparaison de la mesure d'intensité à au moins un profil d'intensité caractéristique d'une catégorie d'un code d'identification (ex : histogrammes avec deux pics à 180° ou quatre pics à 90°), on peut déterminer une probabilité de présence Y0-Y2 pour chaque catégorie de code d'identification ID pour chaque cellule primaire C1.

En référence à la figure 5, il est représenté trois niveaux de probabilité Y0, Y1, Y2 pour un code d'identification appartenant à la catégorie « une dimension » à savoir : une probabilité nulle Y0, une probabilité moyenne Y1 et une probabilité forte Y2. Il va de soi que le nombre de niveaux de probabilité pourrait être différent. De même, des niveaux de probabilité pourraient être présentés pour plusieurs catégories de code d'identification ID.

De manière préférée, la probabilité de présence Y0-Y2 est déterminée par rapport à la hauteur des pics de l'histogramme par comparaison à un profil d'intensité caractéristique pour un code d'identification appartenant à la catégorie « une dimension ».

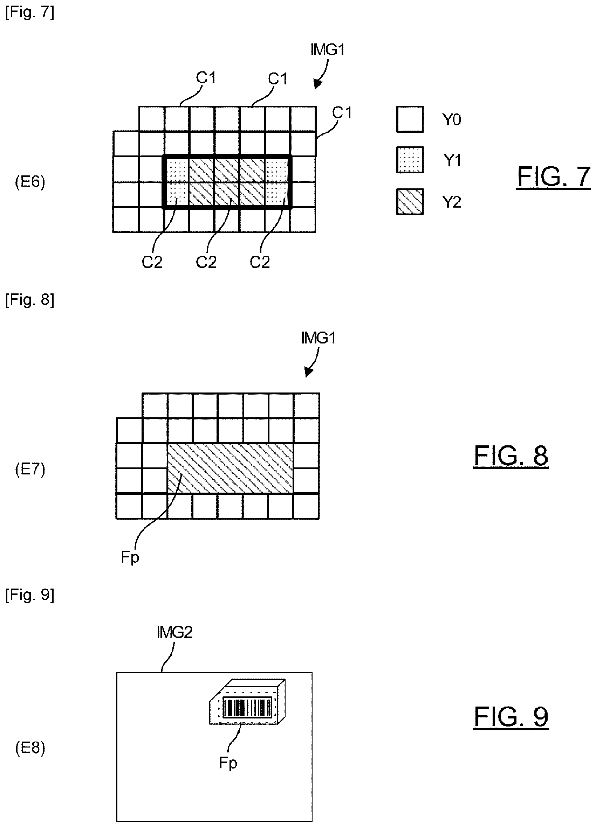

En référence à la figure 7, le procédé comprend une étape consistant à déterminer E6 les cellules primaires C1 ayant une probabilité de présence Y0-Y2 supérieure à un seuil secondaire prédéterminé S6, ci-après désignés, cellules secondaires C2. Dans cet exemple, toutes les cellules primaires C1 ayant une probabilité de présence moyenne Y1 ou forte Y2 sont considérées comme des cellules secondaires C2. Les cellules secondaires C2 sont associées à la catégorie « une dimension ». Il va de soi qu'en présence de plusieurs catégories, il pourrait exister des cellules secondaires C2 pour chaque catégorie.

En référence à la figure 8, le procédé comprend une étape consistant à déterminer E7 une zone de focus pertinente Fp à partir desdites cellules secondaires C2 relatives à chaque catégorie. Comme illustré à la figure 7, la zone de focus pertinent Fp est une forme qui englobe les cellules secondaires C2 de la même catégorie, de préférence, une forme rectangulaire. Dans cet exemple, les cellules secondaires C2 possèdent déjà une forme rectangulaire et la zone de focus pertinente Fp correspond exactement aux cellules secondaires C2. Il va néanmoins de soi que cela pourrait être différent. De préférence, la zone de focus pertinente Fp est centrée sur les cellules secondaires C2 ayant la plus forte probabilité (probabilité Y2). La zone de focus pertinente Fp est ainsi positionnée à la position la plus probable du code d'identification ID.

En référence à la figure 9, le procédé comprend une étape consistant à acquérir E8 une deuxième image IMG2 avec la zone de focus pertinente Fp. Contrairement à l'acquisition de la première image IMG1 avec une zone de focus par défaut Fd située au centre de la première image IMG1, la deuxième image IMG2 possède une zone de focus positionnée en haut à droite et centrée sur le code d'identification ID. Autrement dit, la deuxième image IMG2 est acquise dans des conditions optimales de netteté pour le code d'identification ID. Il est important que la zone de focus pertinente Fp soit déterminée de manière rapide étant donné que la deuxième image IMG2 doit être acquise très rapidement par rapport à la première image IMG1 afin de comprendre une quantité de mouvement réduite. De manière avantageuse, la deuxième image IMG2 est acquise moins de 100ms après la première image IMG1.

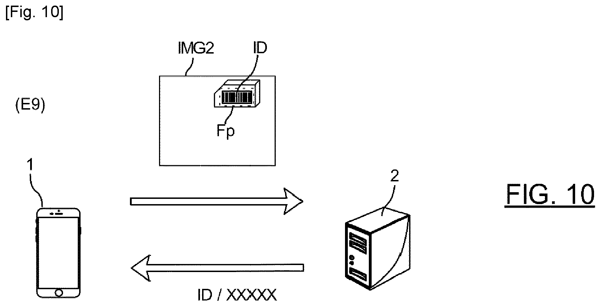

En référence à la figure 10, le procédé comprend une étape consistant à réaliser E9 une lecture d'un code d'identification ID dans la deuxième image IMG2. De manière avantageuse, étant donné que le code d'identification ID est net, la lecture peut être réalisée de manière optimale avec un temps de traitement élevé. De manière préférée, la deuxième image IMG2 est traitée à distance par le serveur de traitement 2 qui permet de fournir directement au téléphone portable 1 le code d'identification ID2 et toute autre information relative au code d'identification ID, par exemple, un prix, un libellé d'identification, un fabricant, etc.

Si plusieurs code d'identification différents sont présents dans une même première image IMG1, on détermine de manière préférée une zone de focus pertinente pour chaque code d'identification. Cela permet l'acquisition de plusieurs deuxièmes images IMG2 avec des zones de focus pertinentes qui sont différentes. De manière préférée, afin de permettre une détermination plus robuste de la zone de focus pertinente Fp, les cellules primaires C1 sont également libellées en fonction de l'orientation du code d'identification ID (position angulaire des pics dans les histogrammes) de manière à faciliter la détection de codes d'identification différents.

Si plusieurs code d'identification appartenant à des catégories différentes sont présents dans une même première image IMG1, on détermine de manière préférée une zone de focus pertinente propre à chaque catégorie pour l'acquisition de plusieurs deuxièmes images IMG2 avec des zones de focus pertinentes qui peuvent être différentes en fonction des catégories. Autrement dit, on peut déterminer une zone de focus pertinente de manière individuelle pour chaque code d'identification. Lorsque deux zones de focus pertinentes sont proches l'une de l'autre, seule une zone de focus est conservée ou déterminée afin de réduire le nombre d'acquisition de deuxièmes images. Le serveur de traitement 2 est de manière avantageuse configuré pour déterminer plusieurs codes d'identification de manière simultanée dans une même deuxième image IMG2.

## Revendications

1. Procédé pour la lecture d'un code d'identification (ID) dans une scène (SC), le procédé comprenant des étapes consistant à :
- Acquérir (E1) une première image numérique (IMG1) de la scène (SC) avec une zone de focus par défaut (Fd),
- Déterminer (E2) une image de mouvement (IMGΔ) par comparaison de la première image numérique (IMG1) à une image numérique antérieure (IMG0), chaque image (IMG1, IMG0) comportant une pluralité de pixels ayant des positions déterminées et chaque pixel ayant une valeur, la valeur de chaque pixel de l'image de mouvement (IMGΔ) étant déterminée par soustraction de la valeur d'un pixel de l'image numérique antérieure (IMG0) à la valeur d'un pixel de la première image numérique (IMG1) à des positions correspondantes,
- Déterminer (E3) dans l'image de mouvement (IMGΔ) les pixels ayant une valeur supérieure à un seuil primaire prédéterminé (S1), ci-après désignés, pixels primaires (PIX1),
- Déterminer (E4) une pluralité de cellules primaires (C1) à partir des pixels primaires (PIX1) dans l'image de mouvement (IMGΔ),
- Déterminer (E5) une probabilité de présence (Y0-Y2) d'un code d'identification (ID) dans chaque cellule primaire (C1) de la première image numérique (IMG1),
- Déterminer (E6) les cellules primaires (C1) ayant une probabilité de présence (Y0-Y2) supérieure à un seuil secondaire prédéterminé (S6), ci-après désignés, cellules secondaires (C2),
- Déterminer (E7) une zone de focus pertinente (Fp) à partir desdites cellules secondaires (C2),
- Acquérir (E8) une deuxième image (IMG2) avec la zone de focus pertinente (Fp) et
- Réaliser (E9) une lecture d'un code d'identification (ID) dans la deuxième image (IMG2).

2. Procédé selon la revendication 1, dans lequel, l'étape consistant à déterminer (E4) une pluralité de cellules primaires (C1) comprend des sous-étapes consistant à :
- Déterminer dans l'image de mouvement (IMGΔ) une pluralité de cellules, chaque cellule englobant un même nombre de pixels,
- Déterminer, pour chaque cellule, le nombre (N1) de pixels primaires (PIX1) compris dans ladite cellule,
- Considérer comme cellule primaire (C1) uniquement une cellule ayant un nombre (N1) de pixels primaires (PIX1) supérieur à un seuil de mouvement prédéterminé (SM).

3. Procédé selon la revendication 2, comprenant une étape (E41) consistant à :
- Déterminer le nombre de cellules primaires (C1) par rapport au nombre total de cellules (CTot) et
- Acquérir une nouvelle première image (IMG1') si le nombre de cellules primaires (C1) par rapport au nombre total de cellules (CTot) est supérieur à un seuil de filtrage prédéterminé (SF).

4. Procédé selon l'une des revendications 1 à 3, dans lequel la zone de focus pertinente (Fp) est déterminée en prenant en compte de manière prioritaire les cellules secondaires (C2) ayant la probabilité de présence (Y0-Y2) la plus forte.

5. Procédé selon l'une des revendications 1 à 4, dans lequel la probabilité de présence (Y0-Y2) d'un code d'identification (ID) dans une cellule primaire (C1) est déterminée au moyen d'au moins une fonction mathématique de corrélation appliquée aux pixels de ladite cellule primaire (C1).

6. Procédé selon la revendication 5, dans lequel la fonction mathématique de corrélation comprend une mesure d'intensité d'un gradient selon différentes orientations angulaires et une comparaison de la mesure d'intensité à au moins un profil d'intensité caractéristique d'une catégorie d'un code d'identification.

7. Procédé selon l'une des revendications 1 à 6, un code d'identification (ID) pouvant appartenir à au moins deux catégories, le procédé comprenant une étape consistant à :
- Déterminer (E5) une probabilité de présence (Y0-Y2) pour chaque catégorie de code d'identification (ID) dans chaque cellule primaire (C1) de la première image numérique (IMG1),
- Pour chaque catégorie de code d'identification (ID), déterminer (E6) les cellules primaires (C1) ayant une probabilité de présence (Y0-Y2) supérieure à un seuil secondaire prédéterminé (S6), ci-après désignés, cellules secondaires (C2),
- Pour chaque catégorie de code d'identification (ID), déterminer (E7) une zone de focus pertinente (Fp) à partir desdites cellules secondaires (C2),
- Pour chaque catégorie de code d'identification (ID), acquérir (E8) une deuxième image (IMG2) avec la zone de focus pertinente (Fp) et
- Pour chaque catégorie de code d'identification (ID), réaliser (E9) une lecture d'un code d'identification (ID) dans la deuxième image (IMG2).

8. Produit de type programme d'ordinateur, comprenant au moins une séquence d'instructions stockée et lisible par un processeur relié à un dispositif d'acquisition et qui, une fois lue par ce processeur, la séquence d'instructions provoque la réalisation des étapes du procédé selon l'une des revendications 1 à 7.

9. Support lisible par un ordinateur comportant le produit de type programme d'ordinateur selon la revendication 8.

10. Système de lecture (10) d'un code d'identification (ID) dans une scène (SC), le système de lecture (10) comprenant un dispositif d'acquisition (11) configuré pour acquérir plusieurs images numériques (IMG0, IMG1, IMG2) de la scène (SC) et un ordinateur (2, 12) configuré pour :
- Commander au dispositif d'acquisition (11) d'acquérir (E1) une première image numérique (IMG1) de la scène (SC) avec une zone de focus par défaut (Fd),
- Déterminer (E2) une image de mouvement (IMGΔ) par comparaison de la première image numérique (IMG1) à une image numérique antérieure (IMG0), chaque image (IMG1, IMG0) comportant une pluralité de pixels ayant des positions déterminées et une valeur, la valeur de chaque pixel de l'image de mouvement (IMGΔ) étant déterminée par soustraction de la valeur d'un pixel de l'image numérique antérieure (IMG0) à la valeur d'un pixel de la première image numérique (IMG1) à des positions correspondantes,
- Déterminer (E3) dans l'image de mouvement (IMGΔ) les pixels ayant une valeur supérieure à un seuil primaire prédéterminé (S1), ci-après désignés, pixels primaires (PIX1),
- Déterminer (E4) une pluralité de cellules primaires (C1) à partir des pixels primaires (PIX1) dans l'image de mouvement (IMGΔ),
- Déterminer (E5) une probabilité de présence (Y0-Y2) d'un code d'identification (ID) dans chaque cellule primaire (C1) de la première image numérique (IMG1),
- Déterminer (E6) les cellules primaires (C1) ayant une probabilité de présence (Y0-Y2) supérieure à un seuil secondaire prédéterminé (S6), ci-après désignés, cellules secondaires (C2),
- Déterminer (E7) une zone de focus pertinente (Fp) à partir desdites cellules secondaires (C2),
- Commander au dispositif d'acquisition (11) d'acquérir (E8) une deuxième image (IMG2) avec la zone de focus pertinente (Fp) et
- Réaliser (E9) une lecture d'un code d'identification (ID) dans la deuxième image (IMG2).
